# EUROPEAN PATENT SPECIFICATION

(11) **EP 1 458 554 B1**
(45) Date of publication and mention of the grant of the patent: **09.12.2009**
(21) Application number: 02783891.1
(22) Date of filing: 16.10.2002
(51) Int. Cl.: B29C 70/00, F16D 1/06, F03D 11/02

(54) **DEVICE AND METHOD FOR A DRIVE SHAFT**
VORRICHTUNG UND VERFAHREN FÜR EINE ANTRIEBSWELLE
DISPOSITIF ET PROCEDE CONCERNANT UN ARBRE D'ENTRAINEMENT

(30) Priority: 31.10.2001 SE 0103610
(43) Date of publication of application: 22.09.2004
(73) Proprietor: SAAB AB, 581 88 Linköping (SE)
(72) Inventor: KROGAGER, Max, S-530 83 Linköping (SE); VAARA, Jan, S-582 75 Linköping (SE)
(74) Representative: Holmberg, Magnus
(86) International application number: PCT/SE2002/001886
(87) International publication number: WO 2003/037608

(56) References cited:
- EP-A1- 0 222 660
- DE-A1- 3 616 791
- FR-A1- 2 589 962
- GB-A- 2 207 732
- US-A- 4 335 587
- US-A- 4 664 644
- US-A- 4 774 043

## Description

### TECHNICAL AREA

The invention concerns a device comprising a drive shaft, to the first end of which drive shaft is applied a first torque, and the second end of which drive shaft is connected to a mechanism driven by the drive shaft. The device is intended in particular for use in a wind power application.

The invention further concerns a method for arranging a drive shaft between a driving hub and a generator in a wind power plant.

### STATE OF THE ART

Wind power plants generally comprise a tower, in which one or more relatively large rotor blades are arranged on a hub. From the hub there extends a rotor shaft, which is in turn mechanically connected to the shaft of an electric generator. Wind that strikes the rotor blade transfers forces to the blade to set the rotor shaft, and thus the generator shaft, in rotation, whereupon the wind energy is converted into electrical energy.

An effort is currently underway to increase the capacity of wind power plants so as to extract a much electrical power as possible using as few power plants as possible. One way to increase the capacity of a wind power plant is to increase its dimensions. Current wind power plants use conventional rotor shafts of metal, and will thus weigh a great deal, given what these large dimensions will mean in terms of the rotor shafts and accessories for mounting the rotor shafts securely to the generator shaft. This entails major problems in the design and construction of wind power plants, which in turn means that the costs associated with the construction of wind power plants are becoming very high. Furthermore, the large dimensions make emergency braking more difficult, since the kinetic mass of the generator is high.

US 4,335,587 describes a connector for a drive shaft made of a fiber material with anisotropic properties. The fibers are oriented at roughly ±45° relative to the shaft direction, so that the connection will exhibit torsional stiffness combined with bending flexibility. US 4,774,043 and US 4,664,644 are further examples of such drive shafts.

### DESCRIPTION OF THE INVENTION

One object of the invention is to simplify the mounting of a drive shaft on a driving or driven mechanism. This is achieved by means of a device according to claim 1. As a result of this design of the notch walls, transverse contraction of said shaft in said notch areas is achieved when the drive shaft is driven in accordance with the aforementioned torque, whereupon clamping forces arise that exert a clamping grip with the associated mechanism connector. The fiber orientation in the aforementioned first set of fibers preferably falls within the range of 30° - 60°, and most preferably around 45°.

To increase the torsional stiffness of the drive shaft, the fiber composite in an embodiment comprises a second set of fibers that extends into the notch wall in a direction falling roughly within a range of -(10° - 80°) relative to the longitudinal direction of the shaft, where the negative range of angles indicates that the fibers are oriented counter to the direction of said first torque. In an embodiment, the fibers in the two sets of fibers are plaited with one another, roughly like a woven basket, in the areas where they cross one another. To achieve a good balance between the demands for torsional stiffness and bending flexibility, the first set of fibers contains, e.g. three times more fibers than the second set of fibers.

As described above, it is the applied torque that enables the drive shaft to grip the driving/driven mechanism. Furthermore, the forces that grip the driving/driven mechanism increase with increasing torque, and vice versa. In an embodiment in which the driven mechanism is mounted on the drive shaft as per the foregoing, this property can be utilized to, when necessary, disengage the drive shaft from the driven mechanism in a simple manner. According to one advantageous embodiment of the invention, the device thus comprises one or more means arranged along the shaft to apply thereto a second torque directed counter to the first torque. With the total torque acting on the shaft substantially reduced, the shaft resumes its original shape in that part of the shaft that is located, in terms of direction of torque, after the means that are applying the second torque. The engagement with the driven mechanism is thereby released.

According to an embodiment of the invention, the drive shaft is dimensioned for a wind power application, and is intended to be arranged between a rotor hub (driving mechanism) and generator (driven mechanism) in a wind power plant. The use of fastening devices such as bolts can be partly or wholly eliminated when mounting the drive shaft to the generator and/or rotor hub in accordance with the principle of the invention. In the event that the use of bolts or the like is entirely eliminated, the drive shaft can be disengaged from the generator relatively quickly, and this can be used as an emergency stop function, among other things. In the event that the entire drive shaft is made of a composite material, its weight will also be substantially reduced in comparison with a drive shaft in which metal is used, thereby significantly facilitating the mounting of the drive shaft in the wind power plant.

The invention also comprises a method for arranging a drive shaft between a driving hub and a generator in a wind power plant. The method is **characterized in that** the drive shaft which, at least along a first length at its end facing the generator, is made of a fiber composite material comprising a first set of fibers that extends along the drive shaft in a direction falling roughly within a range of 10° - 80° in relation to the longitudinal direction of the drive shaft, which said end is centrally equipped with a first notch. That the notch is centered means that it extends from the short side of the shaft and points straight inward along the symmetry line of the shaft. The method is further **characterized in that** a connector for the generator is introduced into the first notch, and in that a torque is applied to the drive shaft via the hub in a direction such that the orientation of the fibers coincides with the direction of the torque, whereupon the torque along said first length brings about transverse contraction of the shaft so as to impose a clamping grip between the drive shaft and the generator connector. A torque is applied to the drive shaft in the opposite direction to release the grip with the generator connector.

According to an embodiment of the method in which the drive shaft is also made of said composite material along a second length at its end facing the hub, which composite material exhibits the same fiber orientation as the first length, the drive shaft is centrally equipped at said end with a second notch, whereupon a connector for the hub is introduced into the second notch. The torque from the hub along said second length thereby brings about transverse contraction of the shaft to impose a clamping grip between the drive shaft and the hub connector.

### BRIEF DESCRIPTION OF FIGURES

Figure 1 shows a schematic side view of a wind power plant;
Figure 2 shows a schematic view of an exemplary coupling between the rotor hub and generator of the wind power plant;
Figure 3 shows a cross-section of a drive shaft according to an embodiment of the invention,
Figure 4 shows a cut-away view of an exemplary generator connector;
Figure 5 shows, in highly schematic form, how the fibers are oriented in the drive shaft material according to a first embodiment of the invention;
Figure 6 shows, in highly schematic form, the shaft according to Figure 5 being subjected to a torque in the direction of fiber winding;
Figure 7 shows, in a highly schematic form, the shaft according to Figure 5 being subjected to a torque oriented counter to the direction of fiber winding, and
Figure 8 shows, in highly schematic form, how the fibers are oriented in the drive shaft material according to a second embodiment of the invention.

### PREFERRED EMBODIMENTS

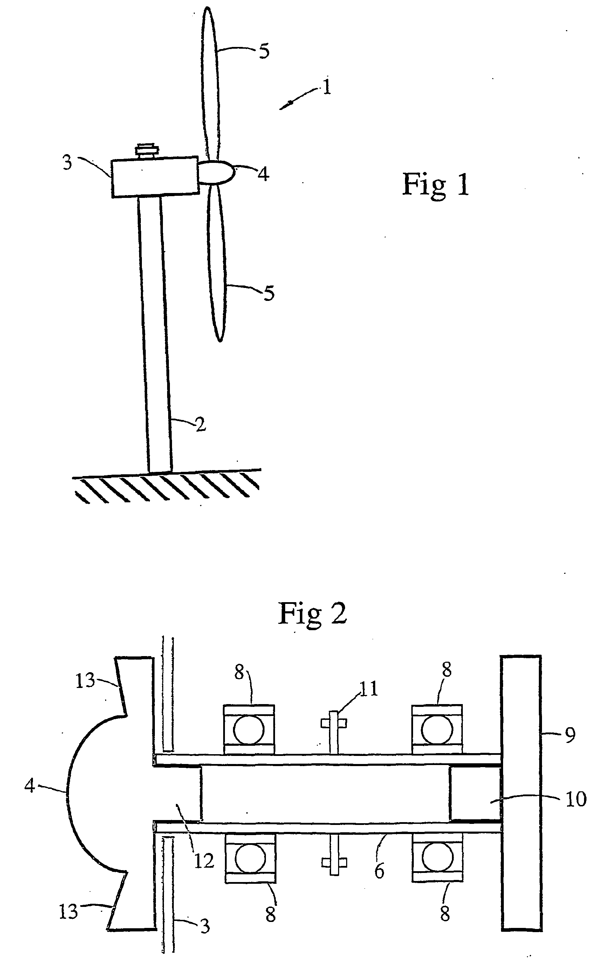

Reference number 1 in Figure 1 generally designates a wind power plant consisting of a tower 2, a housing 3 arranged on top of the tower and a wind turbine arranged in the housing 3, and containing a hub 4 and a rotor blade 5 that is arranged on the hub. The tower 2 is secured to a surface, either on land or at sea.

In Figure 2, the hub 4 comprises connectors 13 for the rotor blade 5. A connecting part 12 and a guide part (not shown) on the hub 4 extend into the housing 3. The connecting part 12 connects the hub 4 to a drive shaft 6 in such a way that, when the hub begins to rotate, the rotational motion is also imparted to the drive 6, as will be described in more detail below. The connecting part 12 is either realized in one piece with the rest of the hub 4 or as a separate part mounted on the hub. The guide part comprises a wall designed to enclose, with play, the drive shaft 6 along a portion of the length of the drive shaft. In one example the wall is a straight cylinder wall with a circular cross-section. Along the wall there are arranged bearings (not shown) that hold the wall, and thus the entire hub 4, in place. The connecting part 12 of the hub thus acts to transfer the rotational motion of the hub to the drive shaft 6, while the guide part serves to hold the hub in position relative to the drive shaft 6 in order to enable unhindered rotation.

Bearings 8 that hold the drive shaft 6 in place are arranged along the length of the drive shaft. At its opposite end the shaft 6 connects to a generator 9, which converts the rotational energy of the shaft into electrical energy. The design of the generator is not an object of the invention; the main point is that the shaft 6 must have some type of operative coupling with the generator 9 via a coupling part 10, which can constitute a part of the generator in an embodiment. The connection of the coupling part 10 to the drive shaft will be described in more detail below; here we will be content to confirm that the connection is arranged so as to transfer the rotation of the drive shaft to the coupling part 10. A brake mechanism 11 is further arranged on the shaft 6. The brake mechanism, in the form of, e.g. one or more disk brakes, does not normally lie in abutment with the shaft 6, but is arranged so as to press against the shaft in order to brake it when actuated.

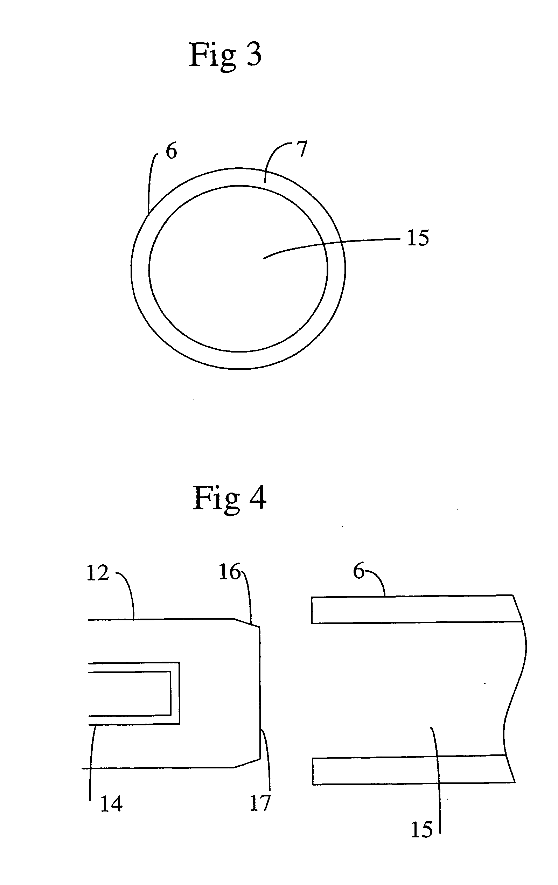

In the example in Figure 2, the drive shaft 6 has a longitudinal through notch 15 surrounded by a wall 7, and has a constant dimension along its entire length. However, it is not necessary for the drive shaft to have a through notch. In an alternative embodiment (not shown), the shaft 6 is solid with the exception of a notch realized so as to receive the connecting part 12 and the coupling part 10. In the example in Figure 3, the drive shaft has a circular cross-section both outwardly and inwardly. The wall is characteristically 5 - 100 mm thick, and the cylinder diameter is characteristically 1 m.

In Figure 4 the connecting part 12 is designed so as to be force-fit into the notch 15 of the drive shaft. The connecting part 12 has a bevel 16 at its end facing the drive shaft 6. In the example in Figure 4, the cross-sectional surface of the edge 17 of the connecting part coincides with the cross-sectional surface of the notch. The radius of the connecting part after the bevel is characteristically ca. 1 - 3 mm large than at the edge 17. In one case where the connecting part 12 is made of metal, one or more channels 14 for a coolant are realized in the connecting part 12. The supplying of coolant in the channels shrinks the metal, thereby creating play between the inner wall of the shaft 6 and the surface (not shown) of the connecting part 12. It is thus advantageous to supply the coolant before mounting the shaft on the hub 4, and to remove the coolant once the connecting part 12 has been conveyed to its mounting position in the drive shaft. The preponderance of metal materials are highly conductive, and the channel design is thus not critical; the cooling spreads to the entire connecting part 12 regardless. When the coolant has been removed, the drive shaft 6 and the connecting part 12 are pressed against one another to a sufficient extent that, when the hub is set into rotation, the torque thus obtained is transferred to the drive shaft.

The coupling part 10 is designed so as to be force-fit into the notch 16 (not shown) of the drive shaft in a corresponding manner. In a case where the coupling part 10 is made of metal, the coupling part 10 is realized with one or more channels 16 for a coolant in the same way as for the connecting part 12. It is thus advantageous to supply the coolant before mounting the shaft to the generator, and to remove the coolant once the coupling part 10 has been conveyed to its mounting position in the drive shaft. In one example the connecting part 12 and the coupling part 10 have a friction-enhancing coating to increase the engagement.

The shaft 6 is made of a fiber composite material, which may be composed of a plastic base reinforced with fiber threads. The plastic is, e.g. an epoxy plastic, vinylester plastic or polyester plastic. Carbon fiber is the currently existing fiber material that has the best properties for reinforcing the plastic, i.e. it is rigid, light and of high strength. Other fiber materials may of course be used; for instance, a composition is conceivable in which the carbon fibers are mixed with fiber glass or aramid fibers.

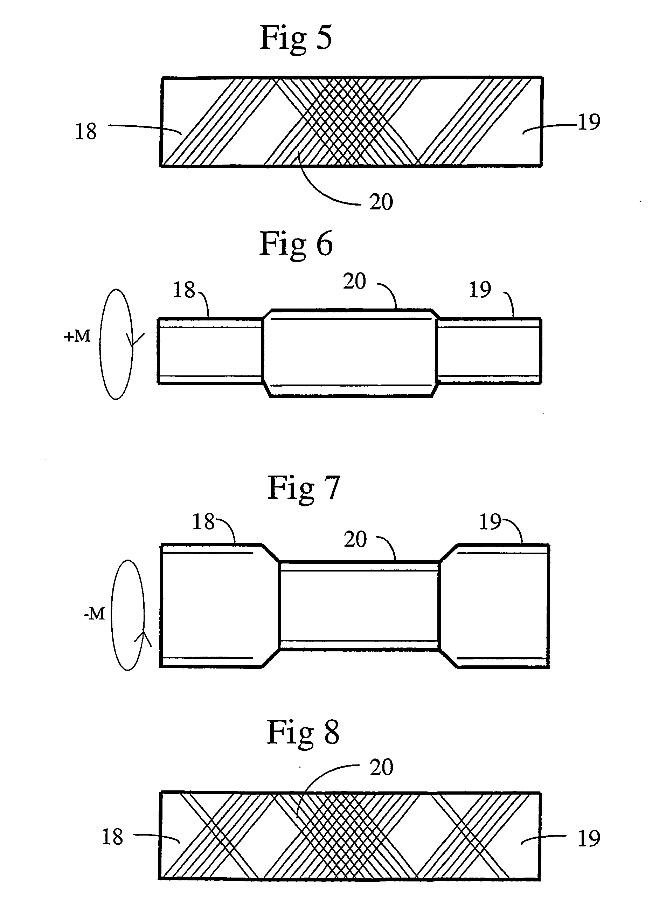

Reference number 18 in Figure 5 designates a section along the length of the shaft where the shaft wall 7, in the assembled position, abuts the connecting part 12, while reference number 19 designates a section along the length of the shaft where the shaft wall, in the assembled position, abuts the coupling part 10.

In addition, reference number 20 designates a section between the assembly sections. Note that the figure is highly schematic, and is intended solely to illustrate the fiber orientations of the various section 18, 19 and 20; in a more realistically executed drive shaft the sections 18 and 10 constitute a small part of the entire drive shaft, while the section 20 constitutes a significant part. The fibers in the assembly section 18, 10 are embedded in the plastic so that they extend into the wall 7 of the shaft 6 in a direction of between 10 and 80° in relation to the longitudinal direction of the drive shaft, where positive angles indicate angles in the intended direction of rotation of the shaft as viewed looking from the hub and toward the generator. For example, the fibers extend at 45° in relation to the longitudinal direction of the shaft. The fibers can be embedded in the plastic in a plurality of layers along the thickness of the entire wall. The way in which the fibers are arranged in the section 20 between the assembly sections 18, 19 is unimportant to the invention. In the example shown in Figure 5, a first set of fibers extends along the drive shaft at a given angle relative to the longitudinal direction of the drive shaft, while a second, equally large set of fibers extends at an angle of the same magnitude but of the opposite sign in relation to the length of the drive shaft.

As described above, the connecting part 12 and the coupling part 10 are designed so that force-fitting occurs between the parts 12, 10 and the drive shaft 6 so that, when the rotation of the hub begins, the torque is transferred to the generator 9 via the drive shaft. The aforedescribed structure of the fiber composite material gives the material anisotropic properties, as a result of which, when a torque is applied in a direction coincident with the winding direction of the fibers, the drive shaft is able to contract in a direction transverse to its longitudinal direction, so-called transverse contraction, at the sections 18 and 19. This is depicted schematically in Figure 6. As Figure 6 shows, essentially no transverse contraction occurs in the section 20, where the counter-directional fiber windings counteract one another. The transverse contraction of the drive shaft obtained at the sections 18, 19 as a result of the applied torque acts to increase the grip on the connecting part 12 and the coupling part 10. The forces that press the drive shaft against the connecting part 12 and the coupling part 10 thus increase with increasing torque, i.e. the faster the drive shaft rotates, the greater the forces normally become. The initial grip between the connecting part 12 and the drive shaft, and between the coupling part 10 and the drive shaft, thus need not be stronger than to enable the drive shaft and coupling part to be set in rotation from their idle state without slippage occurring.

Figure 7 shows schematically how the aforementioned anisotropy will be affected by a direction of fiber winding counter to the torque on the drive shaft, whereupon the torque enables the areas 18, 19 to expand. Figures 6 and 7 thus show that, when the shaft is in rotation in a direction coincident with the fiber direction, the shaft pinches, i.e. the diameter of the notch 15 decreases in comparison with its unloaded diameter while, in the event of rotation in a direction counter to the fiber direction the shaft opens, i.e. the diameter of the notch 15 expands in comparison to its unloaded diameter, whereupon the shaft disengages/decreases the grip of the force fit.

The brake 11, which upon actuation applies a counter-directional torque to the shaft 6, counteracts the torque applied via the connecting part 12 to the drive shaft between the brake and the shaft end at the coupling part 10. The transverse contraction of the fiber composite material at this end thus ceases when the brake is actuated, whereupon only the grip afforded by the force-fit remains. The generator to which the coupling part 10 is connected characteristically has a high kinetic mass, whereupon the force-fit grip decreases and is thus not sufficiently strong by itself to secure the coupling part 10 in the drive shaft. Instead, the brake will quickly brake the wind turbine and the drive shaft, while the coupling part of the generator will continue to rotate in the drive shaft.

In Figure 8, in order to increase the torsional stiffness of the sections 18, 19, a second set of fibers is arranged in the plastic at said sections within a range of -(10° - 80°) relative to the longitudinal direction of the shaft, where the intended rotation direction of the shaft indicates positive fiber winding angles as viewed from the hub toward the generator. A majority of the fibers are still oriented in a positive direction so that the fiber composite will retain its particular behavior when it is subjected to a torque. For example, 70 - 80% of the fibers exhibit a positive fiber-winding direction, while 20 - 30% exhibit a negative fiber-winding direction. The positive and negative fiber-winding directions can have the same angular deviation from the longitudinal axis of the shaft, although this is not a requirement.

In the areas along the length of the shaft where the positively and negatively oriented fibers overlap one another, the positively oriented fibers in one example lie on top of the fibers in the other set. In an alternative embodiment, the fibers cross one another in a plaited pattern in which each positively oriented fiber passes above and below the negatively oriented fibers.

The invention is of course in no way limited to the aforedescribed embodiments, but rather a number of possible modifications thereof will be apparent to one skilled in the art, without deviating from the scope of the accompanying claims.

## Claims

1. A device comprising a drive shaft (6), which drive shaft is arranged at its first end for operative connection with a drive mechanism (4, 5) that applies a first torque to the drive shaft, and which drive shaft is arranged at its second end for operative connection with a mechanism (9) driven by the drive shaft, **characterized in that** drive shaft (6) has, at least at one of its ends, a notch (15) arranged so as to receive a connector (12; 10) for the associated mechanism (4, 5; 9), and **in that** the wall (7) of the notch (15) is, in at least one area (18, 19) at said end, made of fiber composite material comprising a first set of fibers that extends into the notch wall (7) in a direction falling within a range of +(10° - 80°) in relation to the longitudinal direction of the shaft, where the positive range of angles indicates that the fibers are oriented in the direction of said first torque, whereupon the first torque is arranged so as to bring about transverse contraction of the shaft at said notch areas in order to impose a clamping grip on the associated mechanism connector.

2. A device according to claim 1, **characterized in that** there are arranged, at at least one position along the length of the drive shaft, means (11) for applying, upon their actuation, a second torque to the drive shaft in a direction counter to the first torque, whereupon the engagement with the driven mechanism releases.

3. A device according to claim 1, **characterized in that** the drive mechanism (4) comprises one or more wind-driven rotor blades (5), and **in that** the driven mechanism (9) is a generator arranged so as to convert the rotational energy of the shaft into electrical energy.

4. The use of a drive shaft in a wind power plant, **characterized in that** the drive shaft exhibits the characteristics specified in claim 1.

5. A wind power plant comprising a tower (2) and a device according to one of claims 1-4, **characterized in that** said drive mechanism comprises a hub (4) arranged in said tower and one or more rotor blades (5) mounted to said hub, the hub applying a first torque to the drive shaft, and that said mechanism (9) driven by said drive shaft (6) is a generator (9), the notch (15) being arranged at least at the end of the drive shaft facing the generator.

6. A wind power plant according to claim 5, **characterized in that** there are arranged, at at least one position along the length of the drive shaft, means (11) for applying, upon their actuation, a second torque to the drive shaft in a direction counter to the first torque, whereupon the engagement with the generator connector releases.

7. A device according to claim 1 or a wind power plant according to claim 5, **characterized in that** the fiber composition further comprises a second set of fibers that extends along the drive shaft at - (10° -80°) in relation to the longitudinal direction of the shaft, where the negative range of angles indicates that the fibers are oriented counter to the first direction of torque and where a greater part of the fibers are oriented in a positive direction.

8. A device or wind power plant according to claim 7, **characterized in that** the first set of fibers contains three times more fibers than the second set of fibers.

9. A device according to claim 1 or a wind power plant according to claim 5, **characterized in that** the notch (15) is circular in cross-section, and **in that** the connector is circular in cross-section.

10. A device according to claim 1 or a wind power plant according to claim 5, **characterized in that** size of the notch (15) and the size of the connector (10) are essentially constant along the entire gripped length.

11. A device according to claim 1 or a wind power plant according to claim 5, **characterized in that** the range for the first set of fibers is 30° - 60°.

12. A device or wind power plant according to claim 11, **characterized in that** the first fiber orientation is roughly 45° relative to the longitudinal direction of the drive shaft.

13. A device according to claim 1 or a wind power plant according to claim 5, **characterized in that** the connector is made of a material that shrinks in cold, and **in that** at least one channel (8) is realized in the connector for a coolant.

14. A device according to claim 1 or a wind power plant according to claim 5, **characterized in that** the fiber composite is a matrix plastic containing fibers.

15. A method for arranging, in a wind power plant (1), a drive shaft (6) between a driving hub (4) and a generator (9), **characterized in that** the drive shaft is (6), at least along a first length (19) at its end facing the generator, made of a fiber composite material comprising a first set of fibers that extends into the notch wall in a direction falling within a range of +(10° - 80°) relative to the longitudinal direction of the drive shaft, which said end is centrally equipped with a first notch (15) extending from the short side of the shaft and perpendicularly inward, **in that** a connector (10) for the generator is introduced into the first notch, and **in that** a torque is applied to the drive shaft via the hub (4) in a direction such that the direction of torque coincides with the direction of the fiber, whereupon the torque along said first length brings about transverse contraction of the shaft to impose a clamping grip between the drive shaft and the generator connector.

16. A method according to claim 15, **characterized in that** the drive shaft (6), which is also made of said composite material along a second length (18) at its end facing toward the hub (4), with the fibers oriented in the same fiber direction, is centrally equipped at said end with a second notch (15), and **in that** a connector for the hub is introduced into the second notch, whereupon the torque along said second length (18) brings about transverse contraction of the shaft so as to impose a clamping grip between the drive shaft and the hub connector.

17. A method according to claim 15 or 16, **characterized in that** a counterdirected torque is applied to the drive shaft to release the engagement with the generator connector.

## Patentansprüche

1. Einrichtung umfassend eine Antriebswelle (6), wobei die Antriebswelle an ihrem ersten Ende zur Betriebsverbindung mit einem Antriebsmechanismus (4, 5) eingerichtet ist, der eine erste Drehkraft auf die Antriebswelle ausübt, und die Antriebswelle an ihrem zweiten Ende zur Betriebsverbindung mit einem Mechanismus (9) eingerichtet ist, der durch die Antriebswelle angetrieben wird, **dadurch gekennzeichnet, dass** die Antriebswelle (6) zumindest an einem ihrer Enden eine Kerbe (15) aufweist, die eingerichtet ist, ein Verbindungsstück (12; 10) für den zugehörigen Mechanismus (4, 5; 9) aufzunehmen, und dass die Wand (7) der Kerbe (15) in zumindest einem Bereich (18, 19) an dem Ende aus Faserverbundmaterial besteht, das einen ersten Satz Fasern umfasst, der sich in einer Richtung in die Kerbenwand (7) erstreckt, die innerhalb eines Bereichs von +(10° - 80°) in Bezug auf die Längsrichtung der Welle abfällt, wobei der positive Winkelbereich anzeigt, dass die Fasern in der Richtung der ersten Drehkraft ausgerichtet sind, wonach die erste Drehkraft so ausgerichtet ist, dass sie eine Querkontraktion der Welle an den Kerbenbereichen bewirkt, um einen Klemmgriff auf das Verbindungsstück für den zugehörigen Mechanismus auszuüben.

2. Einrichtung nach Anspruch 1, **dadurch gekennzeichnet, dass** an zumindest einer Stelle entlang der Länge der Antriebswelle Mittel (11) zum Ausüben einer zweiten Drehkraft auf die Antriebswelle in einer der ersten Drehkraft entgegengesetzten Richtung bei deren Betätigung, wonach sich der Eingriff mit dem angetriebenen Mechanismus löst, angeordnet sind.

3. Einrichtung nach Anspruch 1, **dadurch gekennzeichnet, dass** der Antriebsmechanismus (4) eine oder mehrere windangetriebene Rotorblätter (5) umfasst und dass der angetriebene Mechanismus (9) ein Generator ist, der eingerichtet ist, die Drehenergie der Welle in elektrische Energie umzuwandeln.

4. Verwendung einer Antriebswelle in einer Windkraftanlage, **dadurch gekennzeichnet, dass** die Antriebswelle die in Anspruch 1 angegebenen Merkmale aufweist.

5. Windkraftanlage umfassend einen Mast (2) und eine Einrichtung nach einem der Ansprüche 1-4, **dadurch gekennzeichnet, dass** der Antriebsmechanismus eine Nabe (4), die in dem Mast angeordnet ist, und ein oder mehrere Rotorblätter (5), die an der Nabe angebracht sind, umfasst, wobei die Nabe eine erste Drehkraft auf die Antriebswelle ausübt, und dass der durch die Antriebswelle (6) angetriebene Mechanismus (9) ein Generator (9) ist, wobei die Kerbe (15) zumindest an dem Ende der Antriebswelle angeordnet ist, das dem Generator zugewandt ist.

6. Windkraftanlage nach Anspruch 5, **dadurch gekennzeichnet, dass** an zumindest einer Stelle entlang der Länge der Antriebswelle Mittel (11) zum Ausüben einer zweiten Drehkraft auf die Antriebswelle in einer der ersten Drehkraft entgegengesetzten Richtung bei deren Betätigung, wonach sich der Eingriff mit dem Generatorverbindungsstück löst, angeordnet sind.

7. Einrichtung nach Anspruch 1 oder Windkraftanlage nach Anspruch 5, **dadurch gekennzeichnet, dass** der Faserverbund ferner einen zweiten Satz Fasern umfasst, der sich entlang der Antriebswelle bei -(10° - 80°) in Bezug auf die Längsrichtung der Welle erstreckt, wobei der negative Winkelbereich anzeigt, dass die Fasern entgegengesetzt zu der ersten Drehkraftrichtung ausgerichtet sind, und wobei ein größerer Teil der Fasern in einer positiven Richtung ausgerichtet ist.

8. Einrichtung oder Windkraftanlage nach Anspruch 7, **dadurch gekennzeichnet, dass** der erste Satz Fasern dreimal mehr Fasern enthält als der zweite Satz Fasern.

9. Einrichtung nach Anspruch 1 oder Windkraftanlage nach Anspruch 5, **dadurch gekennzeichnet, dass** die Kerbe (15) einen kreisförmigen Querschnitt aufweist und dass das Verbindungsstück einen kreisförmigen Querschnitt aufweist.

10. Einrichtung nach Anspruch 1 oder Windkraftanlage nach Anspruch 5, **dadurch gekennzeichnet, dass** die Größe der Kerbe (15) und die Größe des Verbindungsstücks (10) entlang der gesamten gegriffenen Länge im Wesentlichen konstant sind.

11. Einrichtung nach Anspruch 1 oder Windkraftanlage nach Anspruch 5, **dadurch gekennzeichnet, dass** der Bereich für den ersten Satz Fasern 30° - 60° beträgt.

12. Einrichtung oder Windkraftanlage nach Anspruch 11, **dadurch gekennzeichnet, dass** die erste Faserausrichtung annähernd 45° relativ zu der Längsrichtung der Antriebswelle beträgt.

13. Einrichtung nach Anspruch 1 oder Windkraftanlage nach Anspruch 5, **dadurch gekennzeichnet, dass** das Verbindungsstück aus einem Material besteht, das in Kälte schrumpft, und dass zumindest ein Kanal (8) für ein Kühlmittel in dem Verbindungsstück ausgeführt ist.

14. Einrichtung nach Anspruch 1 oder Windkraftanlage nach Anspruch 5, **dadurch gekennzeichnet, dass** der Faserverbund ein Matrixkunststoff ist, der Fasern enthält.

15. Verfahren zum Anordnen einer Antriebswelle (6) in einer Windkraftanlage (1) zwischen einer Antriebsnabe (4) und einem Generator (9), **dadurch gekennzeichnet, dass** die Antriebswelle (6) zumindest entlang einer ersten Länge (19) an ihrem Ende, das dem Generator zugewandt ist, aus einem Faserverbundmaterial besteht, das einen ersten Satz Fasern umfasst, der sich in einer Richtung in die Kerbenwand erstreckt, die innerhalb eines Bereichs von +(10° - 80°) relativ zu der Längsrichtung der Antriebswelle abfällt, wobei das Ende zentral mit einer ersten Kerbe (15) versehen ist, die sich von der kurzen Seite der Welle und senkrecht nach innen erstreckt, dass ein Verbindungsstück (10) für den Generator in die erste Kerbe eingeführt ist und dass eine Drehkraft über die Nabe (4) in einer solchen Richtung auf die Antriebswelle ausgeübt wird, dass die Drehkraftrichtung mit der Richtung der Faser übereinstimmt, wonach die Drehkraft entlang der ersten Länge eine Querkontraktion der Welle bewirkt, um einen Klemmgriff zwischen der Antriebswelle und dem Generatorverbindungsstück zu bewirken.

16. Verfahren nach Anspruch 15, **dadurch gekennzeichnet, dass** die Antriebswelle (6), die entlang einer zweiten Länge (18) an ihrem Ende, das in Richtung auf die Nabe (4) gewandt ist, auch aus dem Verbundmaterial besteht, wobei die Fasern in der gleichen Faserrichtung ausgerichtet sind, zentral an dem Ende mit einer zweiten Kerbe (15) versehen ist und dass ein Verbindungsstück für die Nabe in die zweite Kerbe eingeführt ist, wonach die Drehkraft entlang der zweiten Länge (18) eine Querkontraktion der Welle bewirkt, um einen Klemmgriff zwischen der Antriebswelle und dem Nabenverbindungsstück zu bewirken.

17. Verfahren nach Anspruch 15 oder 16, **dadurch gekennzeichnet, dass** eine entgegengesetzt gerichtete Drehkraft auf die Antriebswelle ausgeübt wird, um den Eingriff mit dem Generatorverbindungsstück zu lösen.

## Revendications

1. Dispositif comprenant un arbre d'entraînement (6), lequel arbre d'entraînement est agencé au niveau de sa première extrémité pour un raccordement fonctionnel avec un mécanisme d'entraînement (4, 5) qui applique un premier couple à l'arbre d'entraînement, et lequel arbre d'entraînement est agencé au niveau de sa seconde extrémité pour un raccordement fonctionnel avec un mécanisme (9) entraîné par l'arbre d'entraînement, **caractérisé en ce que** l'arbre d'entraînement (6) présente, au moins au niveau de l'une de ses extrémités, une encoche (15) agencée de manière à recevoir un connecteur (12 ; 10) du mécanisme associé (4, 5 ; 9), et **en ce que** la paroi (7) de l'encoche (15) est réalisée, dans au moins une zone (18, 19) au niveau de la dite extrémité, dans un matériau composite de fibres qui comprend un premier ensemble de fibres qui s'étendent dans la paroi de l'encoche (7) dans une direction qui se situe dans une plage angulaire de + (10° - 80°) par rapport à la direction longitudinale de l'arbre, la plage angulaire positive indiquant que les fibres sont orientées dans la direction dudit premier couple, grâce à quoi le premier couple est agencé de manière à provoquer une contraction transversale de l'arbre au niveau de ladite zone d'encoche de manière à appliquer une prise de serrage sur le connecteur du mécanisme associé.

2. Dispositif selon la revendication 1, **caractérisé en ce que** des moyens (11) destinés à appliquer, lors de leur actionnement, un second couple à l'arbre d'entraînement dans une direction opposée à celle du premier couple, sont disposés au niveau d'au moins une position située sur la longueur de l'arbre d'entraînement, grâce à quoi la mise en prise avec le mécanisme d'entraînement se libère.

3. Dispositif selon la revendication 1, **caractérisé en ce que** le mécanisme d'entraînement (4) comprend une ou plusieurs pales de rotor entraînées par le vent (5), et **en ce que** le mécanisme entraîné (9) est un générateur agencé de manière à convertir l'énergie de rotation de l'arbre en énergie électrique.

4. Utilisation d'un arbre d'entraînement dans une éolienne, **caractérisée en ce que** l'arbre d'entraînement présente les caractéristiques spécifiées dans la revendication 1.

5. Éolienne comprenant une tour (2) et un dispositif selon l'une quelconque des revendications 1 à 4, **caractérisée en ce que** ledit mécanisme d'entraînement comprend un moyeu (4) disposé dans ladite tour et une ou plusieurs pales de rotor (5) montées sur ledit moyeu, le moyeu appliquant un premier couple à l'arbre d'entraînement, et **en ce que** ledit mécanisme (9) entraîné par ledit arbre d'entraînement (6) est un générateur (9), l'encoche (15) étant agencée au moins au niveau de l'extrémité de l'arbre d'entraînement qui fait face au générateur.

6. Éolienne selon la revendication 5, **caractérisée en ce que** des moyens (11) destinés à appliquer; lors de leur actionnement, un second couple à l'arbre d'entraînement dans une direction opposée à celle du premier couple, sont disposés au niveau au moins d'une position située sur la longueur de l'arbre d'entraînement, grâce à quoi la mise en prise avec le connecteur du générateur se libère.

7. Dispositif selon la revendication 1 ou éolienne selon la revendication 5, **caractérisé en ce que** la composition de fibres comprend en outre un second ensemble de fibres qui s'étendent le long de l'arbre d'entraînement dans une direction qui se situe dans la plage angulaire
- (10° - 80°) par rapport à la direction longitudinale de l'arbre, la plage angulaire négative indiquant que les fibres sont orientées dans la direction opposée à la première direction du couple, et la plupart des fibres étant orientées dans une direction positive.

8. Dispositif ou éolienne selon la revendication 7, **caractérisé en ce que** le premier ensemble de fibres contient trois fois plus de fibres que le second ensemble de fibres.

9. Dispositif selon la revendication 1 ou éolienne selon la revendication 5, **caractérisé en ce que** l'encoche (15) présente une section transversale circulaire, et **en ce que** le connecteur présente une section transversale circulaire.

10. Dispositif selon la revendication 1 ou éolienne selon la revendication 5, **caractérisé en ce que** les dimensions de l'encoche (15) et les dimensions du connecteur (10) sont sensiblement constantes sur toutes la longueur serrée.

11. Dispositif selon la revendication 1 ou éolienne selon la revendication 5, **caractérisé en ce que** la plage angulaire du premier ensemble de fibres se situe entre 30° et 60°.

12. Dispositif ou éolienne selon la revendication 11, **caractérisé en ce que** la première orientation des fibres est approximativement égale à 45° par rapport à la direction longitudinale de l'arbre d'entraînement.

13. Dispositif selon la revendication 1 ou éolienne selon la revendication 5, **caractérisé en ce que** le connecteur est réalisé dans un matériau qui se rétrécit dans le froid, et **en ce qu'**au moins un canal (8) destiné à recevoir un caloporteur, est réalisé dans le connecteur.

14. Dispositif selon la revendication 1 ou éolienne selon la revendication 5, **caractérisé en ce que** le matériau composite de fibres est une matière plastique matricielle qui contient des fibres.

15. Procédé destiné à agencer, dans une éolienne (1), un arbre d'entraînement (6) entre un moyeu d'entraînement (4) et un générateur (9), **caractérisé en ce que** l'arbre d'entraînement (6) est réalisé, au moins sur une première longueur (19) au niveau de son extrémité qui fait face au générateur, dans un matériau composite de fibres qui comprend un premier ensemble de fibres qui s'étendent dans la paroi d'encoche dans une direction qui se situe dans une plage angulaire de + (10° - 80°) par rapport à la direction longitudinale de l'arbre d'entraînement, laquelle dite extrémité est dotée de manière centrale d'une première encoche (15) qui s'étend à partir du côté court de l'arbre et de manière perpendiculaire vers l'intérieur, **en ce qu'**un connecteur (10) du générateur est introduit dans la première encoche, et **en ce qu'**un couple est appliqué à l'arbre d'entraînement par l'intermédiaire du moyeu (4) dans une direction telle que la direction du couple coïncide avec la direction des fibres, grâce à un quoi le couple appliqué sur ladite première longueur provoque une contraction transversale de l'arbre de manière à appliquer une prise de serrage entre l'arbre d'entraînement et le connecteur du générateur.

16. Procédé selon la revendication 15, **caractérisé en ce que** l'arbre d'entraînement (6), qui est également réalisé dans ledit matériau composite sur une seconde longueur (18) au niveau de son extrémité qui fait face vers le moyeu (4), les fibres étant orientées dans la même direction de fibres, est doté de manière centrale au niveau de ladite extrémité d'une seconde encoche (15), et **en ce qu'**un connecteur du moyeu est introduit dans la seconde entaille, grâce à quoi le couple appliqué sur ladite seconde longueur (18) provoque une contraction transversale de l'arbre de manière à appliquer une prise de serrage entre l'arbre d'entraînement et le connecteur du moyeu.

17. Procédé selon la revendication 15 ou la revendication 16, **caractérisé en ce qu'**un couple dirigé dans la direction opposée, est appliqué sur l'arbre d'entraînement de manière à libérer la mise en prise avec le connecteur du générateur.
